# DEMANDE DE BREVET EUROPEEN

(11) **EP 4 187 174 A1**
(43) Date de publication de la demande: **31.05.2023**
(21) Numéro de dépôt: 22209137.3
(22) Date de dépôt: 23.11.2022
(51) Int. Cl.: F24S 30/40

(54) **DISPOSITIF ET PROCÉDÉ DE CONTRÔLE D'UN RÉFLECTEUR D'ÉNERGIE SOLAIRE, CENTRALE SOLAIRE ÉQUIPÉE D'UN TEL DISPOSITIF**

(30) Priorité: 24.11.2021 FR 2112469
(71) Demandeur: Commissariat à l'énergie atomique et aux énergies alternatives, 75015 Paris (FR)
(72) Inventeur: BREGEARD, Etienne, 13107 SAINT PAUL LEZ DURANCE (FR)
(74) Mandataire: Hautier IP

(57) **Abrégé**

Dispositif de contrôle d'un réflecteur d'énergie solaire à destination d'un récepteur, comprenant un actionneur (3) apte à animer un arbre d'entrainement (4) sur lequel est monté un réflecteur, et une structure porteuse (5) supportant l'actionneur (3), et un système de sécurité (10) configuré pour déplacer la structure porteuse (5) afin de modifier l'orientation du réflecteur.

## Description

### DOMAINE TECHNIQUE

La présente invention concerne le domaine du contrôle des réflecteurs d'énergie solaire à destination de récepteurs d'énergie solaire.

### ETAT DE LA TECHNIQUE

Actuellement, les centrales solaires utilisent des récepteurs d'énergie solaire pour transformer l'énergie solaire en énergie thermique, électrique ou les deux. Ces récepteurs visent le disque solaire afin de collecter le rayonnement direct. Certains récepteurs sont équipés d'une articulation motorisée, appelée « tracker » en langue anglaise et qui signifie poursuite, afin de suivre le mouvement du soleil.

D'autres centrales solaires peuvent utiliser des réflecteurs, également équipés d'une articulation motorisée, pour concentrer l'énergie solaire vers les récepteurs. La concentration permanente de l'énergie solaire est généralement assurée par l'articulation motorisée pour suivre le mouvement apparent du soleil afin de garder la concentration focalisée sur le récepteur. Mais la concentration d'énergie solaire peut s'accompagner de risques thermiques comme un dépassement de limites physiques ou réglementaires imposées par les matériaux constitutifs des récepteurs ou bien par le caloporteur employé pour l'extraction voulue de l'énergie apportée au récepteur. La destruction des objets sous le flux, la détérioration du caloporteur ou l'emballement énergétique peuvent entrainer des dommages inadmissibles, voire dangereux. En cas de problème détecté devant conduire à cesser d'apporter de l'énergie au récepteur, on peut arrêter la motorisation. Cet arrêt peut se révéler insuffisant ou inacceptable car l'énergie continue d'être apportée tant que le mouvement apparent du soleil n'a pas provoqué l'effet souhaité. On peut encore mettre en marche arrière ou effectuer tout autre mouvement à partir de la motorisation. Mais la motorisation peut être sujette à une avarie de commande ou d'exécution qui empêche d'effectuer la mise en sécurité voulue. Par ailleurs, les centrales solaires équipées de nombreux réflecteurs nécessitent l'utilisation de nombreuses articulations motorisées. Les opérations de maintenance peuvent être fastidieuses. En outre, les normes de sécurité appliquées à ces articulations motorisées sont contraignantes et il est intéressant de fournir des moyens plus fiables et qui nécessitent des opérations de maintenance plus simples et plus rapides.

Un objet de la présente invention est donc de fournir un moyen simple et fiable pour mettre un récepteur en sécurité.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, il est proposé un dispositif de contrôle d'un réflecteur d'énergie solaire à destination d'un récepteur, comprenant un actionneur apte à animer un arbre d'entrainement sur lequel est monté un réflecteur, et une structure porteuse supportant l'actionneur.

Le dispositif comporte un système de sécurité configuré pour déplacer la structure porteuse afin de modifier l'orientation du réflecteur.

Ainsi, on fournit un moyen pour mettre en sécurité le récepteur qui s'affranchit d'utiliser l'actionneur dédié à la mise en mouvement du réflecteur.

Selon un autre aspect, il est proposé un dispositif de contrôle d'un réflecteur d'énergie solaire à destination d'un récepteur, comprenant un actionneur apte à animer un arbre d'entrainement sur lequel est monté un réflecteur, et une structure porteuse supportant l'actionneur, dans lequel l'actionneur comporte un vérin configuré pour animer l'arbre d'entrainement à partir d'un fluide sous pression.

Le dispositif comporte un réservoir contenant un fluide de réserve sous pression et un système de sécurité configuré pour commander le vérin à partir du fluide de réserve afin de modifier l'orientation du réflecteur.

Ainsi, on fournit un moyen pour mettre en sécurité un récepteur robuste en cas de panne électrique de l'actionneur qui commande le mouvement du réflecteur.

Selon un autre aspect, il est proposé une centrale solaire, comprenant au moins un récepteur, au moins un réflecteur d'énergie solaire à destination dudit au moins un récepteur, et au moins un dispositif de contrôle dudit au moins un réflecteur tel que défini ci-avant.

Selon un autre aspect, il est proposé un procédé de contrôle d'un réflecteur d'énergie solaire à destination d'un récepteur, le réflecteur étant monté sur un arbre d'entrainement animé par un actionneur supporté par une structure porteuse.

Le procédé comporte un déplacement de la structure porteuse afin de modifier une orientation du réflecteur.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente de façon schématique une vue en perspective d'un mode de réalisation d'un dispositif de contrôle ;
La figure 2 représente de façon schématique une vue de côté d'un autre mode de réalisation d'un dispositif de contrôle ;
La figure 3 représente schématiquement une vue en face avant du dispositif de contrôle de la figure 2, où la structure porteuse est dans une première position ;
La figure 4 représente schématiquement une vue en face avant du dispositif de contrôle de la figure 2, où la structure porteuse est dans une deuxième position ;
La figure 5 représente schématiquement une vue en face avant d'un autre mode de réalisation d'un dispositif de contrôle ;
La figure 6 représente schématiquement une vue en face avant du dispositif de contrôle de la figure 5, où le système de verrouillage est dans un état verrouillé ;
La figure 7 représente schématiquement une vue en face avant du dispositif de contrôle de la figure 5, où le système de verrouillage est dans un état déverrouillé ;
La figure 8 représente de façon schématique un autre mode de réalisation d'un dispositif de contrôle ;
La figure 9 représente de façon schématique une vue en perspective et de côté d'un autre mode de réalisation d'un dispositif de contrôle ;
La figure 10 représente schématiquement une vue d'un autre mode de réalisation d'un dispositif de contrôle, où la structure porteuse est dans une première position ;
La figure 11 représente schématiquement une autre vue du dispositif de contrôle de la figure 10, où la structure porteuse est dans une deuxième position ;
La figure 12 représente schématiquement une vue d'un autre mode de réalisation d'un dispositif de contrôle ;
La figure 13 représente schématiquement une vue du dispositif de contrôle de la figure 12, où le système de verrouillage est dans un état verrouillé ;
La figure 14 représente schématiquement une vue du dispositif de contrôle de la figure 12, où le système de verrouillage est dans un état déverrouillé ;
La figure 15 représente schématiquement un autre mode de réalisation d'un dispositif de contrôle, où la structure porteuse est dans une première position ;
La figure 16 représente schématiquement une autre vue du dispositif de contrôle de la figure 15, où la structure porteuse est dans une deuxième position ;
La figure 17 représente schématiquement une vue d'un autre mode de réalisation d'un dispositif de contrôle, où le système de verrouillage est dans un état verrouillé ;
La figure 18 représente schématiquement une vue du dispositif de contrôle de la figure 17, où le système de verrouillage est dans un état déverrouillé ;
Les figures 19 et 20 représentent schématiquement deux vues d'un autre mode de réalisation d'un dispositif de contrôle.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le système de sécurité comporte un organe élastique configuré pour emmagasiner une énergie potentielle lorsque le système de sécurité déplace la structure porteuse dans une première position dans laquelle le réflecteur occupe au moins une orientation instantanée, et pour déplacer la structure porteuse, à partir d'une force de rappel fournie par l'énergie potentielle, dans une deuxième position dans laquelle le réflecteur occupe une orientation distincte de l'orientation instantanée.

Ainsi, on utilise une force mécanique indépendante de l'actionneur qui commande le mouvement du réflecteur, ce qui permet d'améliorer la fiabilité de la mise en sécurité du récepteur.
- Selon un exemple, le dispositif comprend un châssis, et le système de sécurité comprend un support monté mobile sur le châssis, la structure porteuse étant montée sur le support et le système de sécurité étant configuré pour déplacer le support par rapport au châssis afin de déplacer la structure porteuse.

Un tel dispositif est simple à réaliser et nécessite peu d'opérations de maintenance.
- Selon un mode de réalisation, l'arbre d'entrainement est monté mobile en rotation autour d'un axe principal et le support est monté mobile en rotation autour de l'axe principal.
- Selon un autre mode de réalisation, l'arbre d'entrainement est monté mobile en rotation autour d'un axe principal et le support est monté mobile en rotation autour d'un axe secondaire distinct de l'axe principal.
- Selon un exemple, le système de sécurité est configuré pour maintenir la structure porteuse dans la première position à partir d'une force de maintien supérieure ou égale à la force de rappel.

Ainsi on garantit une position de référence du réflecteur.
- Selon un exemple, le dispositif comprend un système de verrouillage configuré pour maintenir la structure porteuse dans la première position lorsque le système de verrouillage est dans un état verrouillé et pour permettre un déplacement de la structure porteuse dans la deuxième position lorsque le système de verrouillage est dans un état déverrouillé.

Ainsi, on peut arrêter d'exercer la force de maintien tout en maintenant la structure porteuse dans la première position.
- Selon un exemple, le déplacement de la structure porteuse de la première position à la deuxième position correspond à une modification de l'orientation du réflecteur d'un angle supérieur ou égal à 2°.

On obtient facilement une diminution efficace de la concentration d'énergie solaire sur le récepteur.
- Selon un exemple, l'organe élastique est un ressort.
- Selon un exemple, le système de sécurité comprend un vérin apte à déplacer la structure porteuse.
- Selon un exemple, l'organe élastique correspond à un ressort du vérin.
- Selon un exemple, l'actionneur anime l'arbre d'entrainement de manière à modifier l'orientation du réflecteur selon un premier sens d'orientation et le système de sécurité est configuré pour déplacer la structure porteuse de manière à modifier l'orientation du réflecteur selon un deuxième sens d'orientation opposé au premier sens d'orientation.
Ainsi, on assure une diminution de la concentration d'énergie solaire sur le récepteur malgré un déplacement intempestif du réflecteur par l'actionneur.

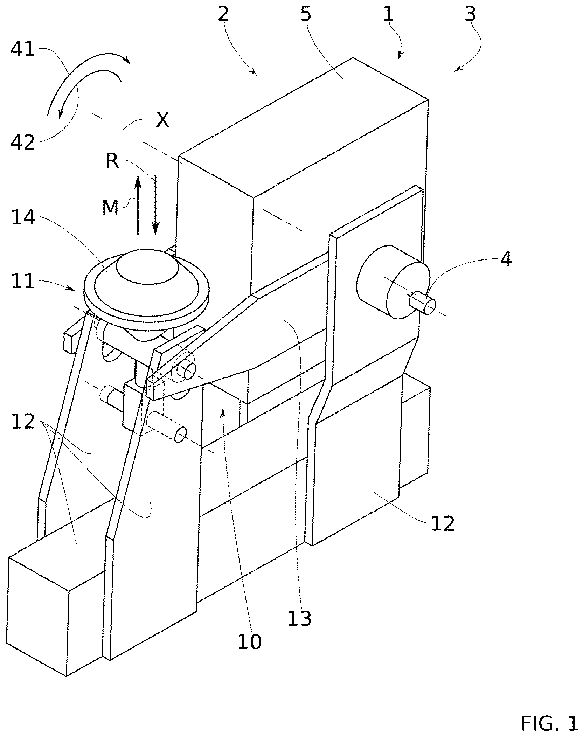

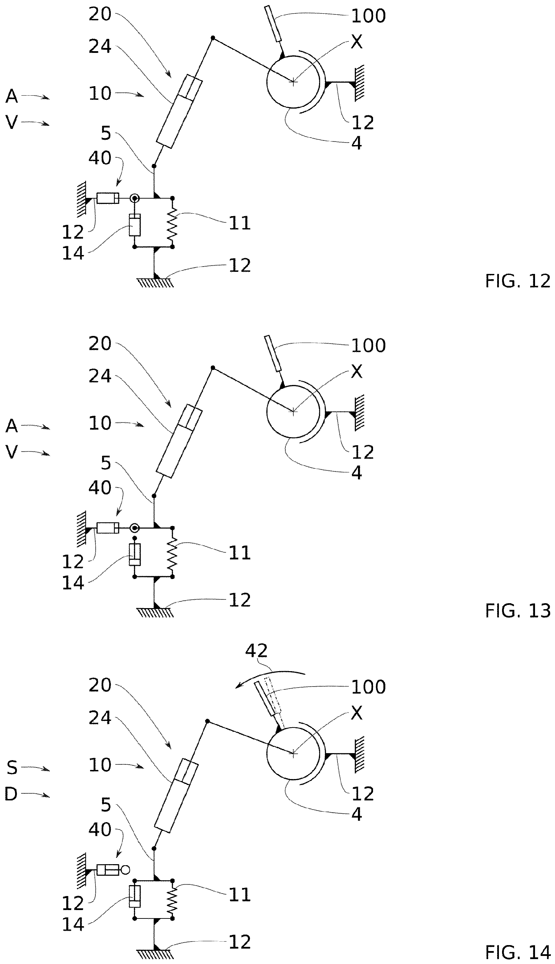

Sur les figures 1 à 16, on a représenté un dispositif de contrôle 1 d'un réflecteur d'énergie solaire à destination d'un récepteur. Le récepteur d'énergie solaire peut-être un panneau photovoltaïque pour transformer l'énergie solaire en énergie électrique, ou un panneau solaire pour transformer l'énergie solaire en énergie thermique. En particulier, le réflecteur permet de concentrer le rayonnement lumineux à destination d'un récepteur afin d'augmenter la quantité lumineuse reçue par le récepteur. Par exemple, le réflecteur peut être un concentrateur linéaire de Fresnel, c'est-à-dire un ensemble de miroirs plats. Le réflecteur et le récepteur ne sont pas représentés à des fins de simplification.

Le dispositif 1 comporte un système d'entrainement 2 apte à animer le réflecteur afin de pouvoir suivre le mouvement du soleil. En d'autres termes, le système d'entrainement 2 est apte à modifier une orientation du réflecteur. On entend par orientation du réflecteur une position par rapport à une position instantanée du récepteur dont la position peut être fixe ou variable.

Le système d'entrainement 2 comprend un actionneur 3, un arbre d'entrainement 4 et une structure porteuse 5. Le réflecteur est monté sur l'arbre d'entrainement 4. L'actionneur 3 est monté sur la structure porteuse 5. La structure porteuse 5 permet de supporter l'actionneur 3. L'actionneur 3 est en outre relié mécaniquement à l'arbre d'entrainement 2, soit directement, soit par l'intermédiaire d'un réducteur de couple, par exemple un ensemble d'engrenages couplant mécaniquement l'actionneur 3 à l'arbre d'entrainement 4. Ainsi, l'actionneur 3 est apte à animer l'arbre d'entrainement 4 pour déplacer le réflecteur par rapport au récepteur afin de modifier son orientation. Plus particulièrement, l'arbre d'entrainement 4, lorsqu'il est animé, est mobile par rapport à la structure porteuse 5.

En particulier, le dispositif 1 comporte un système de sécurité 10 configuré pour modifier l'orientation du réflecteur en cas de besoin, notamment lorsqu'on souhaite diminuer la concentration d'énergie solaire focalisée sur le récepteur. De manière générale, on dit qu'on déplace les réflecteurs dans une position « défocalisée ». En d'autres termes, le système de sécurité 10 est apte à mettre en sécurité le récepteur, pour éviter une augmentation de température intempestive. On dit également qu'on place le réflecteur en sécurité. Avantageusement, le dispositif 1 peut être équipé d'un moyen de détection de température du récepteur afin de commander la mise en sécurité du récepteur.

De manière générale, le système de sécurité est configuré pour déplacer la structure porteuse 5 afin de modifier une orientation du réflecteur. Le système de sécurité 10 permet de modifier une orientation du réflecteur afin de diminuer la concentration d'énergie solaire sur le récepteur. En d'autres termes, le système de sécurité 10 déplace le réflecteur pour défocaliser ce dernier.

Selon un mode de réalisation, illustré aux figures 1 à 7, le système de sécurité 10 comporte un organe élastique 11. L'organe élastique 11 est configuré pour emmagasiner une énergie potentielle lorsque le système de sécurité 10 déplace la structure porteuse 5 dans une première position A. Dans la première position A, le système d'entrainement 2 occupe une position normale de fonctionnement, c'est-à-dire qu'il modifie l'orientation du réflecteur en suivant le mouvement du soleil. Dans la première position A, le réflecteur occupe au moins une orientation instantanée. La première position A est également notée position de fonctionnement. On dit également que dans la première position A, le système de sécurité est armé. En d'autres termes, dans la première position A, le système de sécurité 10 est armé et la première position A est un repère pour l'orientation angulaire du réflecteur. L'organe 11 est également configuré pour déplacer la structure porteuse 5, à partir d'une force de rappel R fournie par l'énergie potentielle, dans une deuxième position S dans laquelle le réflecteur occupe une orientation distincte de l'orientation instantanée. On note également la deuxième position S, la position de sécurité du réflecteur. On dit également que le système de sécurité 10 occupe une position désarmée. En d'autres termes, l'énergie potentielle emmagasinée par l'organe élastique 11 peut être restituée lorsqu'on souhaite mettre en position de sécurité le réflecteur.

Dans ce mode de réalisation, le dispositif 1 comprend un châssis 12 et le système de sécurité 10 comprend un support 13 monté mobile sur le châssis 12. Le châssis 12 du dispositif 1 est fixe. Le châssis 12 est une structure, par exemple métallique, ancrée au sol ou sur un autre élément de fixation ancré lui-même au sol. Par exemple, le châssis 12 peut être une chape de béton, ou un cadre rigide métallique. La structure porteuse 5 est en outre montée sur le support 13. Par exemple la structure porteuse 5 peut être montée fixe sur le support 13, et dans ce cas la structure porteuse 5 reste immobile par rapport au support 13. En variante, la structure porteuse 5 peut être montée mobile sur le support 13. Dans les deux cas, la structure porteuse 5 reste liée mécaniquement au support 13, c'est-à-dire que la structure porteuse 5 se déplace lorsque le support 13 est déplacé par le système de sécurité 10. De façon générale, le système de sécurité 10 est configuré pour déplacer le support 13 par rapport au châssis 12 afin de déplacer la structure porteuse 5 par rapport au châssis 12.

Lorsqu'on souhaite utiliser le système d'entrainement 2 en fonctionnement normal, le système de sécurité 10 déplace la structure porteuse 5 dans la position A, en emmagasinant une énergie potentielle par l'intermédiaire de l'organe élastique 11. Avantageusement, le système de sécurité 10 est configuré pour maintenir la structure porteuse 5 dans la première position A. On dit également que le support 13 est maintenu dans la première position A. Par exemple, le système de sécurité 10 maintient la structure porteuse 5 dans la première position A à partir d'une force de maintien M supérieure ou égale à la force de rappel R. Le système de sécurité 10 peut générer la force de maintien M à l'aide d'un vérin de maintien 14 du type électrique, de préférence hydraulique ou pneumatique. Un vérin électrique comporte une motorisation électrique apte à déplacer une vis en translation. Un vérin hydraulique ou pneumatique comporte une tige apte à être déplacée en translation sous l'action d'un fluide sous pression. Le vérin de maintien 14 pneumatique ou hydraulique peut être un vérin simple effet muni d'un ressort de rappel, ou double effet avec deux chambres aptes à recevoir un fluide pour déplacer la tige du vérin dans un sens ou dans l'autre. L'organe élastique 11 peut être un ressort ou un vérin additionnel. Avantageusement l'organe élastique 11 est le ressort de rappel du vérin de maintien 14 simple effet. La force M de maintien est telle que le vérin de maintien 14 maintient le support 13 en position quelle que soit l'orientation du réflecteur, contrant ainsi les couples opposés qui pourraient s'exercer sur l'arbre d'entrainement 4, et la force de rappel R exercée en sens opposé par l'organe élastique 11.

En cas de détection d'un défaut, le système de sécurité 10 déplace la structure porteuse 4 dans la deuxième position S grâce à l'effort fourni par l'énergie potentielle préalablement emmagasinée. Le déclenchement de la mise en position de sécurité du réflecteur est effectué en arrêtant de générer la force de maintien M, ou en la diminuant de manière qu'elle soit strictement inférieure à la force de rappel R. Le déclenchement de la mise en position de sécurité peut être commandé par une électrovanne qui assure une commande fiable. En outre, la pression du fluide du vérin de maintien 14 nécessaire pour générer la force de maintien M peut être contrôlée en tout ou rien pour la mise en position de sécurité du réflecteur, et ainsi la mise en sécurité du récepteur.

Plus particulièrement, dans le mode de réalisation, illustré aux figures 1 à 7, l'arbre d'entrainement 4 est monté mobile en rotation autour d'un axe principal X et le support 13 est monté mobile en rotation autour de l'axe principal X. Par exemple, le support 13 peut être un bras de levier monté fixe sur la structure porteuse 5. Le bras de levier a une première partie en saillie de la structure porteuse 5 reliée à l'organe élastique 11, et une autre partie creuse pour laisser passer l'arbre d'entrainement 4. Ainsi, le système de sécurité 10 est configuré pour déplacer la structure porteuse 5 en rotation autour de l'axe principal X.

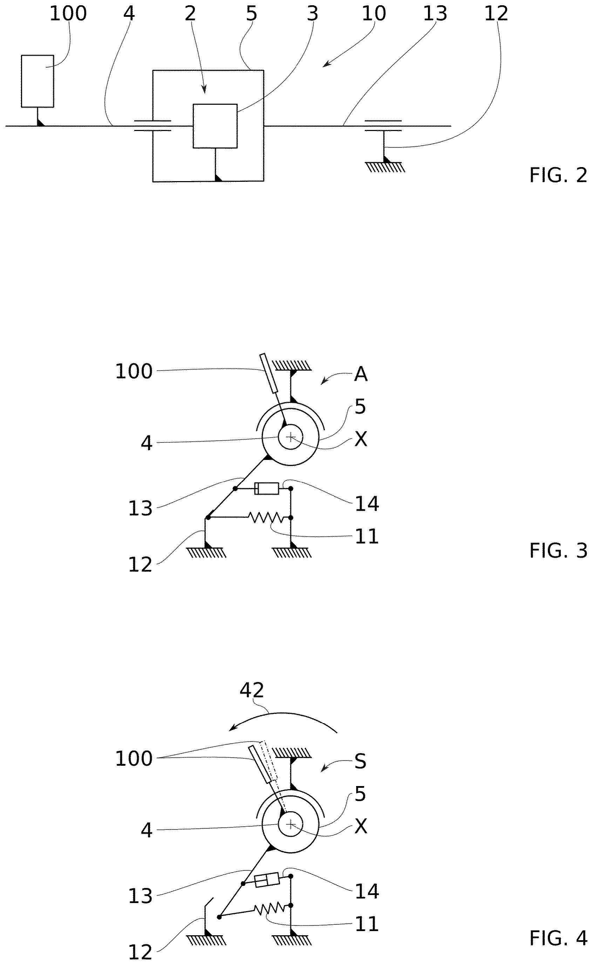

Sur la figure 3, on a représenté la structure porteuse 5 dans la première position A. Dans la première position A, le réflecteur peut être animé en rotation autour de l'axe principal X. Sur la figure 4, on a représenté le système d'entrainement 2 dans la deuxième position S. Dans la deuxième position S, l'orientation du réflecteur a été modifiée. C'est-à-dire que le réflecteur a été déplacé par rapport à une position instantanée qu'il occupait dans la première position A. Dans la deuxième position S, l'organe élastique 11 fournit une force de rappel R pour déplacer le support 13 par rapport au châssis 12.

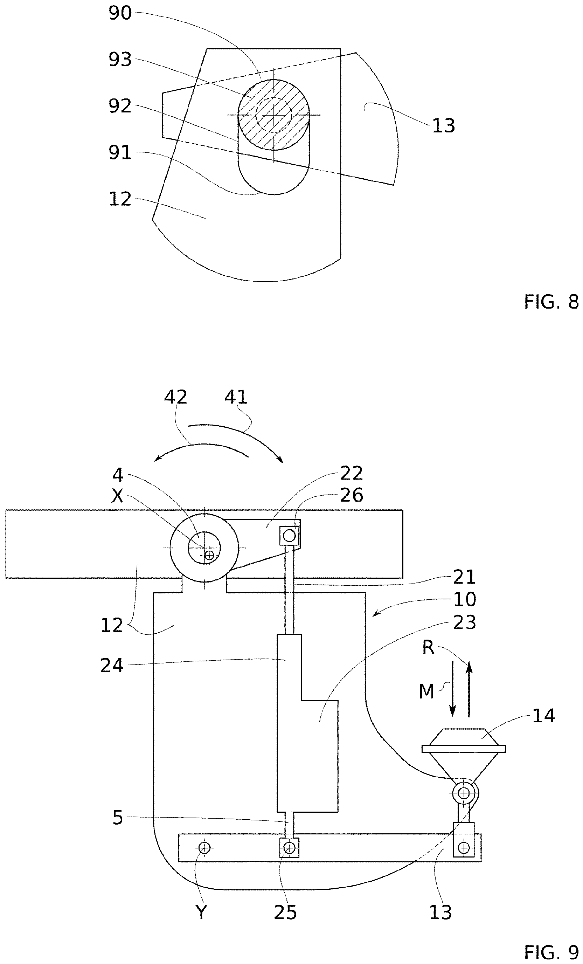

Sur la figure 8, on a représenté un mode de réalisation dans lequel le système de sécurité 10 comporte une butée principale 90 pour faciliter le maintien de la structure porteuse 5 dans la première position A. Par exemple, la butée principale 90 est montée sur le châssis 12. Selon un mode de réalisation, on forme un orifice oblong 92 au sein du châssis 12 et la butée principale 90 est formée à une extrémité de l'orifice oblong 92. Par ailleurs, le support 13 comporte un ergot 93 logé dans l'orifice oblong. Ainsi, lorsque la structure porteuse 5 est dans la première position A, l'ergot 93 est en appui contre la butée principale 90. Par ailleurs une butée secondaire 91 est formée à l'autre extrémité de l'orifice oblong 92. Dans ce cas, lorsque la structure porteuse 5 est dans la deuxième position S, l'ergot 93 est en appui contre la butée secondaire 91. Avantageusement, l'amplitude du mouvement du support 13 entre les deux butées est déterminé pour obtenir une modification d'orientation angulaire du réflecteur d'un angle supérieur ou égal à 2°.

Selon un autre mode de réalisation, illustré à la figure 9, le support 13 est monté mobile en rotation autour d'un axe secondaire Y distinct de l'axe principal X. En particulier, comme illustré sur la figure 9, l'axe secondaire Y est parallèle à l'axe principal X. Dans ce cas, l'actionneur 3 peut comprendre un vérin d'entrainement 20 du type électrique, apte à animer en rotation l'arbre d'entrainement 4 autour de l'axe principal X. En particulier, le vérin d'entrainement 20 comporte une tige mobile 21 reliée mécaniquement à l'arbre d'entrainement 4 par l'intermédiaire d'un flasque 22. Le vérin d'entrainement 20 comporte en outre une motorisation électrique 23 apte à déplacer la tige mobile 21 en translation le long d'un corps 24 du vérin d'entrainement 20. Le corps 24 du vérin d'entrainement 20 est relié mécaniquement à la structure porteuse 5. La structure porteuse 5 correspond à un bras de liaison relié au corps 24 et au support 13. La structure porteuse 5 est montée sur le support 13, par exemple à pivotement par l'intermédiaire d'une liaison pivot 25. Ainsi, comme illustré sur la figure 9, le système de sécurité 10 est configuré pour déplacer la structure porteuse 5 en rotation autour d'un axe de la liaison pivot 25, l'axe de la liaison pivot 25 étant parallèle à l'axe secondaire Y.

Par ailleurs, le support 13 est monté en rotation autour de l'axe secondaire Y, sur le châssis 12. Le vérin de maintien 14 du système de sécurité 10 est couplé mécaniquement au support 13 de manière à déplacer le support 13 en rotation autour de l'axe secondaire Y. Ainsi, le vérin de maintien 14 permet de déplacer le corps 24 du vérin d'entrainement 20 dans la première position A en générant la force de maintien M. Dans ce cas, le ressort du vérin de maintien 14 emmagasine une énergie potentielle. Le ressort du vérin de maintien 14 correspond à l'organe élastique 11 du système de sécurité 10. Lorsque le vérin de maintien 14 relâche la force de maintien M, le ressort déplace le corps 24 dans la deuxième position S, en déplaçant le support 13. Ainsi, en déplaçant le corps 24 du vérin d'entrainement 20, on modifie la position de la tête 26 du vérin d'entrainement 20 sans modifier la course du vérin 20. La position angulaire de l'arbre d'entrainement 4 est alors modifiée du fait de la nouvelle position de la tête 26 du vérin 20.

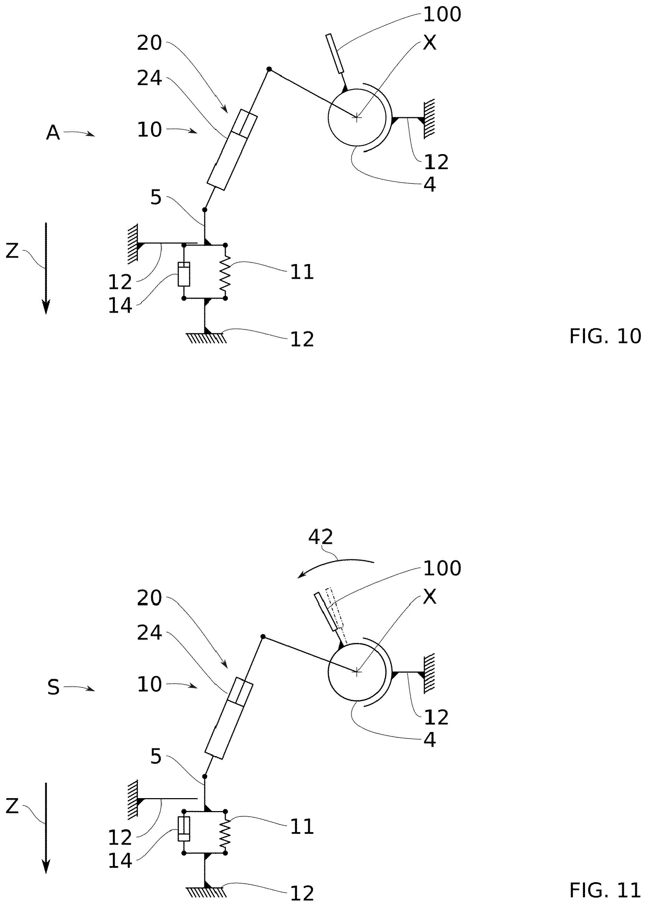

Sur les figures 10 à 14, on a représenté un autre mode de réalisation dans lequel l'actionneur 3 comprend un vérin d'entrainement 20 du type électrique dont le corps 24 est monté sur la structure porteuse 5. Dans ce mode de réalisation, la structure porteuse 5 est montée mobile en translation le long d'un axe tertiaire Z par rapport au châssis 12. L'axe tertiaire Z est perpendiculaire à l'axe principal X. Dans ce cas, le vérin de maintien 14 du système de sécurité 10 est couplé mécaniquement à la structure porteuse 5 de manière à déplacer la structure porteuse 5 en translation selon l'axe tertiaire Z. En outre, l'organe élastique 11 est un ressort relié à la structure porteuse 5 et au châssis 12.

Sur la figure 10, on a représenté la structure porteuse 5 dans la première position A, et sur la figure 11, on a représenté la structure porteuse 5 dans la deuxième position S.

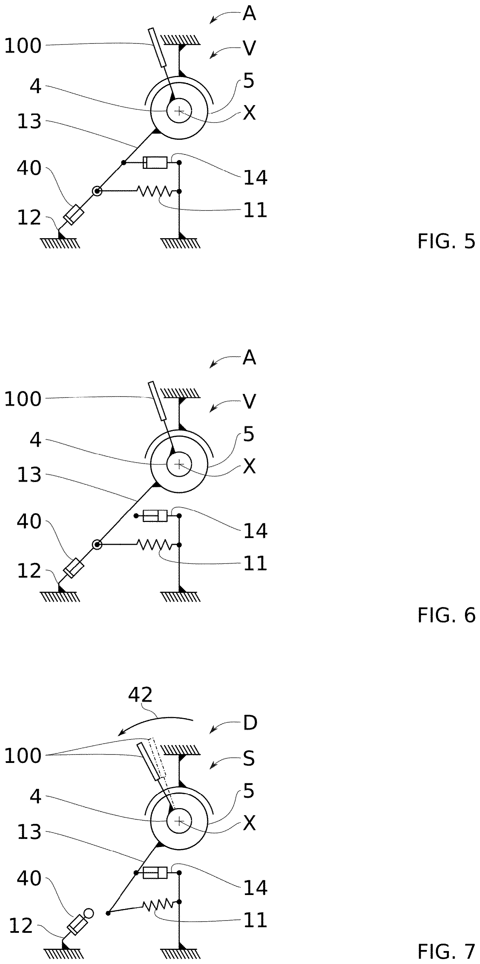

Avantageusement, le système de sécurité 10 peut comprendre un système de verrouillage 40, comme illustré aux figures 5 à 7 ; 12 à 14 et 17, 18, pour maintenir la structure porteuse 5 dans la première position A. Dans ce cas, le système de verrouillage 40 est dans un état verrouillé V. Avantageusement, lorsque le système de verrouillage 40 est dans l'état verrouillé V, la force de maintien M peut être relâchée et la structure porteuse 5 maintenue dans la première position A. En outre, le système de verrouillage 40 est configuré pour permettre un déplacement de la structure porteuse 5 dans la deuxième position S lorsque le système de verrouillage 40 est dans un état déverrouillé D. Par exemple, le système de verrouillage 40 peut comprendre un verrou mécanique et/ou électrique. Le verrou peut être une goupille mobile pour bloquer la structure porteuse 5 dans une position de maintien par rapport au châssis 12. Dans la position de maintien, le système de verrouillage 40 est dans l'état verrouillé V. Afin de mettre le réflecteur en position de sécurité, le système de verrouillage 40 déplace la goupille mobile et libère la structure porteuse 5. Le verrou peut également être un vérin de verrouillage, du type électrique, de préférence du type hydraulique ou pneumatique. Le système de verrouillage 40 permet de dimensionner le vérin de maintien 14 de manière optimale, c'est-à-dire suffisamment pour déplacer la structure porteuse 5 dans la première position A, c'est-à-dire pour vaincre les efforts ou couples résistants et la force de rappel R, les efforts sur le vérin de maintien 14 lorsque le système de sécurité 10 est armé pendant le mouvement du réflecteur étant contrés par le système de verrouillage 40. En d'autres termes, le maintien en première position A est assuré par le système de verrouillage 40 de façon que les efforts sur l'arbre d'entrainement 4 pendant le mouvement du réflecteur (sollicitations climatiques, déséquilibres, vibrations...) soient supportés par le système de verrouillage 40 au lieu d'être supportés par le vérin de maintien 14.

Le déplacement de la structure porteuse 5 depuis la première position A vers la deuxième position S correspond, de préférence, à une modification de l'orientation du réflecteur d'un angle supérieur ou égal à 2°. Ainsi, la modification d'orientation est suffisante pour que la défocalisation ait lieu, et donc la mise en sécurité du récepteur.

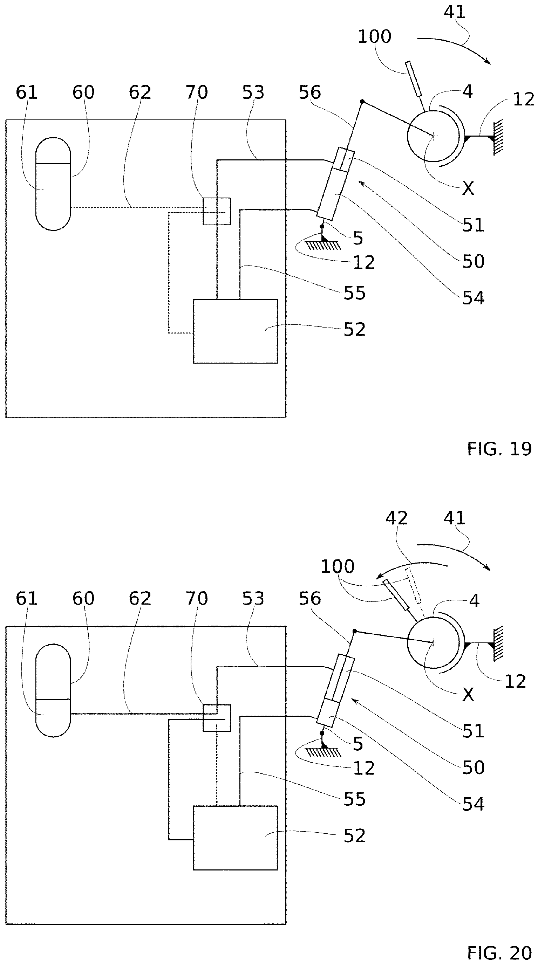

En fonctionnement normal, le système d'entrainement 2 anime l'arbre d'entrainement 4 de manière à modifier l'orientation du réflecteur selon un premier sens d'orientation 41. Avantageusement, le premier sens d'orientation 41 correspond à un sens est-ouest de manière à suivre le déplacement du soleil. Plus particulièrement, comme illustré sur les figures 9 et 19, l'orientation du réflecteur selon le premier sens d'orientation 41 correspond à une orientation angulaire du réflecteur par rapport à l'axe principal X. En d'autres termes, le système d'entrainement 2, et plus particulièrement l'actionneur 3, est configuré pour déplacer le réflecteur en rotation autour de l'axe principal X selon le premier sens d'orientation 41, c'est-à-dire selon un premier sens de rotation autour de l'axe principal X. Dans ce cas, le système de sécurité 10 est configuré pour déplacer la structure porteuse 5 de façon à modifier l'orientation du réflecteur selon un deuxième sens d'orientation 42 opposé au premier sens d'orientation 41. Plus particulièrement, comme illustré sur les figures 4, 7, 9, 11, 14, 16, 18 et 20, l'orientation du réflecteur selon le deuxième sens d'orientation 42 correspond à une orientation angulaire du réflecteur par rapport à l'axe principal X. En d'autres termes, le système de sécurité 10 est configuré pour déplacer le réflecteur en rotation autour de l'axe principal X selon le deuxième sens d'orientation 42, c'est-à-dire selon un deuxième sens de rotation autour de l'axe principal X et opposé au premier sens de rotation. Ainsi, on garantit une diminution de la concentration d'énergie solaire sur le récepteur. En effet, le soleil peut poursuivre sa course et la concentration d'énergie solaire reste diminuée. En outre, l'actionneur 3 peut continuer à entrainer le réflecteur en rotation selon le premier sens d'orientation 41, sans pour autant augmenter la concentration d'énergie solaire. En d'autres termes, quelle que soit la réaction du système d'entrainement 2, par exemple une poursuite du mouvement du réflecteur, un arrêt ou tout autre réaction, lors du déplacement du réflecteur par le système de sécurité 10, ou après la mise en position de sécurité du réflecteur, le système de sécurité 10 assure une diminution de la concentration d'énergie solaire sur le récepteur.

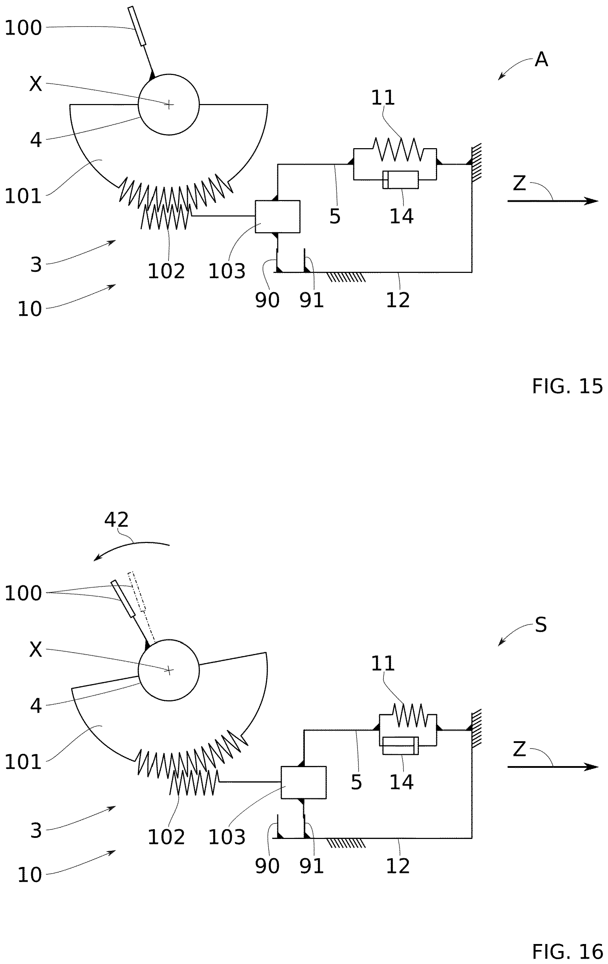

Selon un autre mode de réalisation, illustré aux figures 15 à 18, la structure porteuse 5 est montée mobile en translation le long d'un axe tertiaire Z distincte de l'axe principal X. L'axe tertiaire Z est perpendiculaire à l'axe principal X. Dans ce cas, l'actionneur 3 comprend un pignon 101, une vis 102 engrenant le pignon 101 et un moteur 103 apte à animer en rotation la vis 102. On appelle également l'ensemble pignon 101, vis 102 un ensemble roue-vis. Le pignon 101 est cranté pour coopérer avec la vis 102, il peut être une roue ou une demi-roue comme illustré sur les figures 15 à 18. Le pignon 101 est monté fixe à l'arbre d'entrainement 4. En particulier, le moteur 103 anime en rotation la vis 102 autour de l'axe tertiaire Z. La vis 102 anime le pignon 101 en rotation autour de l'axe principal X pour animer l'arbre d'entrainement 4 en rotation autour de l'axe principal X. Le moteur 103 est monté fixe sur la structure porteuse 5. Dans ce mode de réalisation, la structure porteuse 5 est un châssis intermédiaire monté mobile en translation le long de l'axe tertiaire Z par rapport au châssis 12 fixe. Par ailleurs, le vérin de maintien 14 du système de sécurité 10 est couplé mécaniquement à la structure porteuse 5 de manière à déplacer la structure porteuse 5 en translation le long de l'axe tertiaire Z. Ainsi, le vérin de maintien 14 permet de déplacer la structure porteuse 5 dans la première position A en générant la force de maintien M. En outre, l'organe élastique 11 est un ressort monté sur la structure porteuse 5 et sur le châssis 12. Lorsque le vérin de maintien 14 relâche la force de maintien M, le ressort déplace la structure porteuse 5 dans la deuxième position S, en déplaçant le moteur 103 et la vis 102 en translation le long de l'axe tertiaire Z. Ainsi, en déplaçant la vis 102 en translation selon l'axe tertiaire Z, la vis 102 entraine le pignon 101 en rotation selon le deuxième sens d'orientation 42. Ainsi, en déplaçant la structure porteuse 5, on déplace le réflecteur 100 en rotation selon le deuxième sens d'orientation 42 et on place le réflecteur 100 en position de sécurité.

Sur la figure 15, on a représenté la structure porteuse 5 dans la première position A, et sur la figure 16, on a représenté la structure porteuse 5 dans la deuxième position S.

Par ailleurs, le système de sécurité 10 peut comprendre une butée principale 90 et une butée secondaire 91 pour limiter les déplacements de la structure porteuse 5 en translation le long de l'axe tertiaire Z.

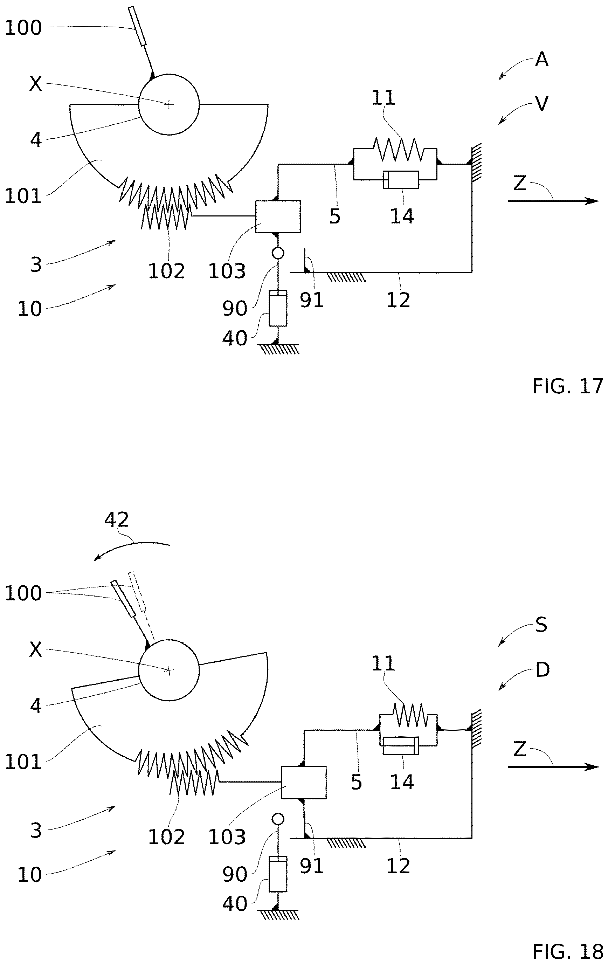

Avantageusement, le système de sécurité 10 peut comprendre le système de verrouillage 40, tel que défini ci-avant, pour maintenir la structure porteuse 5 dans la première position A. Sur la figure 17, on a représenté la structure porteuse 5 dans la première position A et le système de verrouillage 40 est dans l'état verrouillé V. Sur la figure 18, la structure porteuse 5 est dans la deuxième position S et le système de verrouillage 40 est dans l'état déverrouillé D.

Sur les figures 19 et 20, on a représenté un autre mode de réalisation dans lequel l'actionneur 3 du système d'entrainement 2 comprend un vérin de commande 50. Le vérin de commande 50 est un vérin du type fluidique, c'est-à-dire un vérin hydraulique ou pneumatique. En particulier, le vérin de commande 50 est un vérin double effet comprenant deux chambres 51, 54 et une tige 56 apte à être déplacée sous l'action d'un fluide sous pression transféré dans l'une ou l'autre chambre 51, 54. Le vérin de commande 50 comprend un première chambre 51 reliée à un système de commande 52 par première connexion 53 et par l'intermédiaire d'une électrovanne commandée 70. Le vérin de commande 50 comprend une deuxième chambre 54 reliée au système de commande 52 par une deuxième connexion 55. Le système de commande 52 est relié à un fluide sous pression pour commander le déplacement de la tige 56 du vérin de commande 50. En particulier, le système de commande 52 transfert un fluide sous pression dans la deuxième chambre 54 pour déplacer la tige 56 qui déplace le réflecteur selon le premier sens d'orientation 41. La première chambre 51 permet à la tige 56 du vérin de commande 50 d'effectuer une course en translation de manière inverse. Ainsi, pour déplacer le réflecteur selon un sens d'orientation 42 opposé au premier sens d'orientation 41, le système de commande 52 transfert un fluide sous pression dans la première chambre 51. En outre, le système de sécurité 10 comporte un réservoir 60 destiné à contenir un fluide de réserve 61 sous pression. Le fluide de réserve 61 fait office de réserve d'énergie potentielle dédiée à la mise en position de sécurité du réflecteur. Le fluide de réserve peut être un liquide ou un gaz par exemple de l'air. Le système de sécurité 10 est configuré pour commander le vérin de commande 50 à partir du fluide de réserve 61 afin de modifier une orientation du réflecteur. Plus particulièrement, pour mettre le réflecteur en position de sécurité, le système de sécurité 10 transfère le fluide de réserve 61 dans la première chambre 51 pour modifier l'orientation du réflecteur selon le deuxième sens d'orientation 42. L'électrovanne 70 est couplée au réservoir 60 par l'intermédiaire d'une connexion 62. En outre, le système de sécurité 10 est configuré pour commander l'électrovanne 70. Ainsi, le système de sécurité peut commander l'électrovanne 70 de manière à coupler le système de commande 52 au vérin de commande 50, en isolant le réservoir 60. Dans ce cas, le système de commande 52 peut modifier l'orientation du réflecteur en fonctionnement normal, c'est-à-dire en suivant le mouvement du soleil selon le premier sens d'orientation 41. Pour mettre en position de sécurité le réflecteur, le système de sécurité 10 commande l'électrovanne 70 de manière à coupler le réservoir 60 avec la première chambre 51 du vérin de commande 50, en isolant le système de commande 52. Dans ce cas, le fluide de réserve 61 est transféré dans la première chambre 51 de manière à déplacer le réflecteur selon le deuxième sens d'orientation 42 et pour la mise en position de sécurité du réflecteur.

Un tel dispositif 1 est particulièrement adapté pour mettre en position de sécurité de nombreux réflecteurs. Ainsi, une centrale solaire peut comprendre au moins un récepteur d'énergie solaire et au moins un réflecteur. La centrale solaire peut comporter au moins un dispositif de contrôle d'au moins un réflecteur tel que défini ci-avant.

Par ailleurs, un procédé de contrôle réflecteur peut être mis en oeuvre par le dispositif tel que défini ci-avant.

## Revendications

1. Dispositif de contrôle d'un réflecteur d'énergie solaire à destination d'un récepteur, comprenant un actionneur (3) apte à animer un arbre d'entrainement (4) sur lequel est monté un réflecteur, une structure porteuse (5) supportant l'actionneur (3), et un système de sécurité (10) configuré pour déplacer la structure porteuse (5) afin de modifier l'orientation du réflecteur, l'actionneur (3) étant apte à animer l'arbre d'entrainement (4) de manière à modifier l'orientation du réflecteur selon un premier sens d'orientation (41), **caractérisé en ce que** le système de sécurité (10) est configuré pour déplacer la structure porteuse (5) de manière à modifier l'orientation du réflecteur selon un deuxième sens d'orientation (42) opposé au premier sens d'orientation (41).

2. Dispositif selon la revendication 1, dans lequel le système de sécurité (10) comporte un organe élastique (11) configuré pour emmagasiner une énergie potentielle lorsque le système de sécurité (10) déplace la structure porteuse (5) dans une première position (A) dans laquelle le réflecteur occupe au moins une orientation instantanée, et pour déplacer la structure porteuse (5), à partir d'une force de rappel (R) fournie par l'énergie potentielle, dans une deuxième position (S) dans laquelle le réflecteur occupe une orientation distincte de l'orientation instantanée.

3. Dispositif selon la revendication 2, comprenant un châssis (12), et dans lequel le système de sécurité (10) comprend un support (13) monté mobile sur le châssis (12), la structure porteuse (5) étant montée sur le support (13) et le système de sécurité (10) étant configuré pour déplacer le support (13) par rapport au châssis (12) afin de déplacer la structure porteuse (5).

4. Dispositif selon la revendication 3, dans lequel l'arbre d'entrainement (4) est monté mobile en rotation autour d'un axe principal (X) et le support (13) est monté mobile en rotation autour de l'axe principal (X).

5. Dispositif selon la revendication 3, dans lequel l'arbre d'entrainement (4) est monté mobile en rotation autour d'un axe principal (X) et le support (13) est monté mobile en rotation autour d'un axe secondaire (Y) distinct de l'axe principal (X).

6. Dispositif selon l'une des revendications 2 à 5, dans lequel le système de sécurité (10) est configuré pour maintenir la structure porteuse (5) dans la première position (A) à partir d'une force de maintien (M) supérieure ou égale à la force de rappel (R).

7. Dispositif selon l'une des revendications 2 à 6, comprenant un système de verrouillage (40) configuré pour maintenir la structure porteuse (5) dans la première position (A) lorsque le système de verrouillage (40) est dans un état verrouillé (V) et pour permettre un déplacement de la structure porteuse (5) dans la deuxième position (S) lorsque le système de verrouillage (40) est dans un état déverrouillé (D).

8. Dispositif selon l'une des revendications 2 à 7, dans lequel le déplacement de la structure porteuse (5) de la première position (A) à la deuxième position (S) correspond à une modification de l'orientation du réflecteur d'un angle supérieur ou égal à 2°.

9. Dispositif selon l'une des revendications 2 à 8, dans lequel l'organe élastique (11) est un ressort.

10. Dispositif selon l'une des revendications 2 à 9, dans lequel le système de sécurité (10) comprend un vérin (14) apte à déplacer la structure porteuse (5).

11. Dispositif selon la revendication 10, dans lequel l'organe élastique (11) correspond à un ressort du vérin (14).

12. Dispositif de contrôle d'un réflecteur d'énergie solaire à destination d'un récepteur, comprenant un actionneur (3) apte à animer un arbre d'entrainement (4) sur lequel est monté un réflecteur, et une structure porteuse (5) supportant l'actionneur (3), l'actionneur (3) comporte un vérin (50) configuré pour animer l'arbre d'entrainement (4) à partir d'un fluide sous pression, et le dispositif comporte un réservoir (60) contenant un fluide de réserve (61) sous pression et un système de sécurité (10) configuré pour commander le vérin (50) à partir du fluide de réserve (61) afin de modifier l'orientation du réflecteur, l'actionneur (3) étant apte à animer l'arbre d'entrainement (4) de manière à modifier l'orientation du réflecteur selon un premier sens d'orientation (41), **caractérisé en ce que** le système de sécurité (10) est configuré pour commander le vérin (50) afin de déplacer la structure porteuse (5) de manière à modifier l'orientation du réflecteur selon un deuxième sens d'orientation (42) opposé au premier sens d'orientation (41).

13. Centrale solaire comprenant au moins un récepteur, au moins un réflecteur d'énergie solaire à destination dudit au moins un récepteur, et au moins un dispositif de contrôle dudit au moins un réflecteur selon l'une des revendications 1 à 12.

14. Procédé de contrôle d'un réflecteur d'énergie solaire à destination d'un récepteur, le réflecteur étant monté sur un arbre d'entrainement (4) animé par un actionneur (3) supporté par une structure porteuse (5), le procédé comportant une animation, à l'aide de l'actionneur (3), de l'arbre d'entrainement (4) de manière à modifier l'orientation du réflecteur selon un premier sens d'orientation (41), **caractérisé en ce que** le procédé comporte un déplacement de la structure porteuse (5) afin de modifier l'orientation du réflecteur selon un deuxième sens d'orientation (42) opposé au premier sens d'orientation (41).
